(19) **Europäisches Patentamt** | **European Patent Office** | **Office européen des brevets**

(11) **EP 4 737 717 A1**

(12) **EUROPEAN PATENT APPLICATION**

(43) Date of publication:
06.05.2026 Bulletin 2026/19

(21) Application number: 25159791.0

(22) Date of filing: 25.02.2025

(51) International Patent Classification (IPC):
*F03D 17/00* (2016.01)

(52) Cooperative Patent Classification (CPC):
**F03D 17/011; F03D 17/006; F03D 17/014;**
F05B 2270/331; F05B 2270/708; F05B 2270/8042;
F05B 2270/821

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 29.10.2024 IN 202411082609

(71) Applicant: **RE Technologies GmbH**
**22083 Hamburg (DE)**

(72) Inventors:
• **CHAGANTI, KALYAN**
**560066 Bengaluru (IN)**
• **KERUR, DEEPAK**
**560066 Bengaluru (IN)**

(74) Representative: **Buzzi, Notaro & Antonielli d'Oulx
S.p.A.
Corso Vittorio Emanuele II, 6
10123 Torino (IT)**

(54) **A SYSTEM AND METHOD FOR PREVENTING SHUTDOWN OF A WIND TURBINE GENERATOR**

(57) The present invention provides a system (100) and method for preventing shutdown of a wind turbine generator due to faulty blade load sensors (BLS) (110), embedded within one or more blades of the WTG. The system comprises a Controller (200) within the WTG, which is configured to receive strain values from one or more BLS (110) and derive a first bending moment therefrom. The first bending moment is used as a primary bending moment input under normal circumstances. The controller (200) also derives a reference bending moment based on one or more wind data parameters received from one or more alternative sources (120) and thereafter compares the first and reference bending moment. If the first bending moment is above or below a predetermined threshold bending moment, the controller (200) determines that the BLS (110) is faulty and it replaces the first bending moment with the reference bending moment as primary bending moment input thereby preventing the shutdown of the WTG due to the faulty BLS (110).

Fig. 1

EP 4 737 717 A1

## Description

### Field of Invention:

The present invention relates to a system and method for preventing shutdown of a wind turbine generator, more particularly due to faulty Blade load sensors (BLS).

### Background of the Invention:

The following background discussion includes information that may be useful in understanding the present invention. It is not an admission that any of the information provided herein is prior art or relevant to the presently claimed invention, or that any publication expressly or implicitly referenced is prior art.

In operation, sensors play a major role in the safety of wind turbines. Without sensors, wind turbines would arguably be less safe, more costly to operate, unable to accurately predict and solve impending failures, or potentially have less lifetimes. Most important is that wind turbines need accurate data about every turbine component to work efficiently. Further, based on the input from the sensors, the controller of the wind turbine controls operation to make the wind turbine safe from the environmental condition like harsh wind speed. Certain controller features like Individual Pitch Control (IPC) uses Blade load bending moment as an input to control loads. Blade load sensors (BLS) are glued to the surface of the blade near the blade root and estimates the flap wise bending moment which is used for reducing the asymmetric loading on the wind turbines.

Accurate estimations of blade bending moment through BLS can be obtained by performing different types of calibration routine/s that involve strain measurements under certain known operating conditions.

Safe turbine operation is achieved by taking the turbines to low power modes in case of any abnormal behavior detected during calibration or normal operation. Sometimes, these status codes are found to create unnecessary shutdowns or unnecessarily lead turbines to low power modes due to incorrect estimation of strains and blade bending moments by the blade load sensors. Such incorrect estimations can happen due to bad installation, non-adherence to proper blade surface preparation for good gluing, control algorithm bugs, incorrect calibration, dirt, cable bending and incorrect controller parameterization. This leads the turbines to shut down or operate in low power mode as the controller reacts to incorrect estimations causing generation loss to the customers.

### Objectives of the Invention:

The primary object of the present invention is to provide system and method which prevents the unnecessary shutdown of the wind turbine generators.

Another object of the present invention is to provide system and method which prevents unnecessary shutdown of the wind turbine generators due to faulty blade load sensors (BLS).

Another object of the present invention is to provide system and method which takes consideration of input from an alternative source in case of faulty BLS to avoid unnecessary shut down of the wind turbine generator.

### Summary of the Invention:

In an aspect, present invention provides a system for preventing shutdown of a Wind Turbine Generator (WTG) due to one or more faulty Blade load sensors (BLS) embedded within one or more blades of the WTG, the system comprising a Controller within the WTG, the Controller configured to:

a) receive strain values from one or more BLS and deriving a first bending moment therefrom wherein the first bending moment is used as a primary bending moment input under normal circumstances;

b) derive a reference bending moment based on one or more wind data parameters received from one or more alternative sources;

c) compare the first and reference bending moments, wherein if the first bending moment is above or below a pre-determined threshold bending moment, determining that the BLS is faulty; and

d) upon determining that the BLS is faulty, replacing the first bending moment with the reference bending moment as primary bending moment input to the controller thereby preventing the shutdown of the WTG due to the faulty BLS.

In another aspect of the Invention, there is provided a method for preventing shutdown of a Wind Turbine Generator (WTG) due to one or more faulty Blade load sensors (BLS) embedded within one or more blades of the WTG, the method comprising the steps of:

a) receiving strain values from one or more BLS and deriving a first bending moment therefrom wherein the first bending moment is used as a primary bending moment input under normal circumstances;

b) deriving a reference bending moment based on one or more wind data parameters received from one or more alternative sources;

c) comparing the first and reference bending moments, wherein if the first bending moment is above or below a pre-determined threshold bending moment, determining that the BLS is faulty;

d) upon determining that the BLS is faulty, replacing the first bending moment with the reference bending moment as primary bending moment input to the controller thereby preventing the shutdown of the WTG due to the faulty BLS.

**Brief description of drawings:**

To further clarify advantages and features of the present invention, a more particular description of the invention will be rendered by reference to specific embodiments thereof, which is illustrated in the appended drawings. It is appreciated that these drawings depict only typical embodiments of the invention and are therefore not to be considered limiting of their scope. The invention will be described and explained with additional specificity and detail with the accompanying drawings in which:

Fig. 1: illustrates a front view of a wind turbine according to an embodiment of the present invention;

Fig. 2: illustrates a controller and its components in the present invention; and

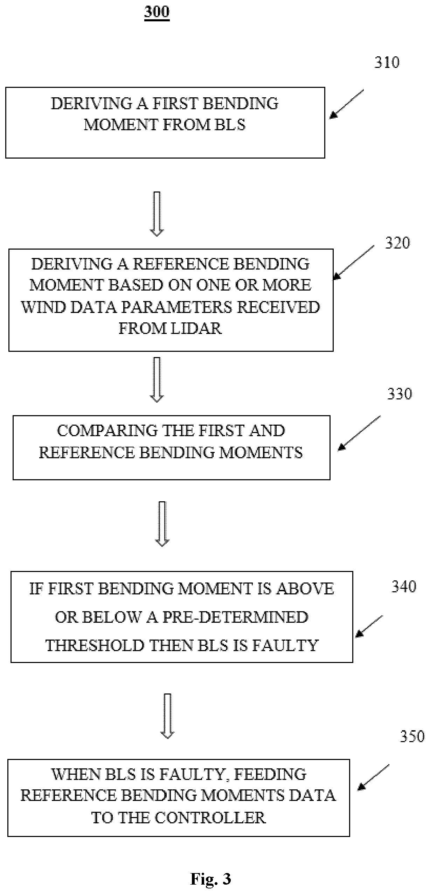

Fig. 3: illustrates a block diagram depicting a method of implementing the present invention.

**Detailed description:**

For the purpose of promoting an understanding of the principles of the invention, reference will now be made to the embodiment illustrated in the drawings and specific language will be used to describe the same. It will nevertheless be understood that no limitation of the scope of the invention is thereby intended, such alterations and further modifications in the illustrated system, and such further applications of the principles of the invention as illustrated therein being contemplated as would normally occur to one skilled in the art to which the invention relates.

It will be understood by those skilled in the art that the foregoing general description and the following detailed description are exemplary and explanatory of the invention and are not intended to be restrictive thereof.

The terms "comprises", "comprising", "includes", or any other variations thereof, are intended to cover a non-exclusive inclusion, such that a setup, device or method that comprises a list of components or steps does not include only those components or steps but may include other components or steps not expressly listed or inherent to such setup or device or method. In other words, one or more elements in a system or apparatus proceeded by "comprises... a" does not, without more constraints, preclude the existence of other elements or additional elements in the system or method.

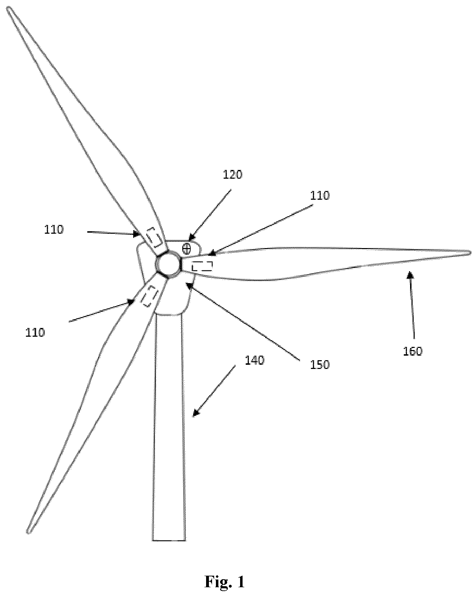

In an embodiment, FIG. 1 illustrates a front view of a wind turbine according to an embodiment of the present invention. As shown, the wind turbine includes a tower 140 extending from the ground, a nacelle mounted on the tower 140, and a rotor coupled to the nacelle. The rotor includes a rotatable hub 150 and three rotor blades 160 connected to the rotatable hub 150. Each rotor blade 160 may be spaced about the rotatable hub 150 to facilitate rotating the rotor to enable kinetic energy to be transferred from the wind into mechanical energy, and subsequently, electrical energy. For instance, the rotatable hub 150 may be rotatably coupled to an electric generator positioned within the nacelle to permit electrical energy to be produced. In general, the generator is coupled to the rotor of the wind turbine for generating electrical power from the rotational energy generated by the rotor. For example, the rotor may include a main shaft coupled to the hub for rotation. The generator may then be coupled to the main shaft such that rotation of the main shaft drives the generator.

As shown in FIG.1, the rotor blade 160 is equipped with a Blade Load Sensor (BLS) 110, such as a strain-gauge, accelerometer, vibration sensor, or any other type of sensor capable of measuring at least a magnitude of a bending moment experienced by a WTG blade. The BLS 110 may be positioned at a root end of the blade to sense stress due to a flap bending moment of the blade, i.e., a moment that causes the blade to deflect in a direction normal to the plane of the rotor. Although the wind turbine 100 is depicted as having only one BLS 110 on each blade 160, multiple BLS 110 may be included on each blade. Furthermore, in addition to positioning one or more BLS 110 one or more additional sensors may be used to measure operating environment condition. For example, the WTG 100 may include a LIDAR 120 mounted on the nacelle which measures a wind speed and based on that controller may estimate the bending movement of the blade in real time.

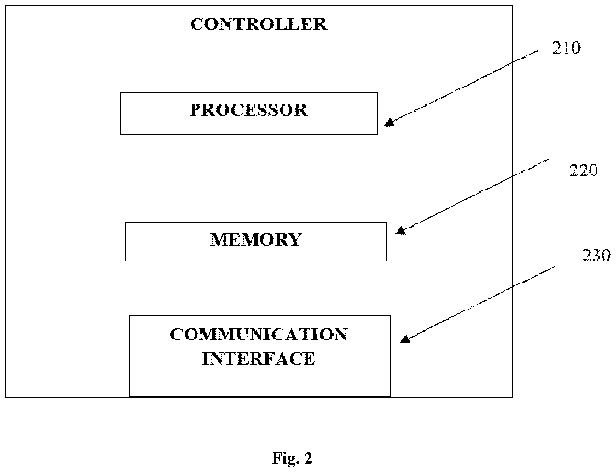

Referring to FIG. 2, the wind turbine 100 includes a turbine controller 200 within the nacelle. For example, the turbine controller 200 is disposed of within a portion of the nacelle. The turbine controller 200 is configured to control the various operating modes and/or components of the wind turbine 100.

In an embodiment, the turbine controller 200 is communicatively coupled to various components of the wind turbine 100 for controlling the wind turbine. For example, the turbine controller 200 may be communicatively coupled to the yaw drive mechanism of the wind turbine 100 for controlling and/or altering the yaw direction of the nacelle relative to the direction of the wind. Further, as the direction of the wind changes, the turbine controller 200 may be configured to control a yaw angle of the nacelle about a yaw axis to position the rotor blades 160 with respect to the direction of the wind, thereby controlling the loads acting on the wind turbine 160. For example, the turbine controller 200 may be configured to transmit control signals to a yaw drive mechanism of the wind turbine, via a yaw controller or direct transmission, such that the nacelle may be rotated about the yaw axis via a yaw bearing.

Similarly, the turbine controller 200 is also communicatively coupled to a pitch system having a plurality of pitch adjustment mechanisms for controlling and/or altering the pitch angle of the rotor blades 160. For instance, the turbine controller 200 transmit a control signal to each pitch adjustment mechanism such that one or more actuators of the pitch adjustment mechanism may be utilized to adjust the pitch angle of the rotor blades 160 by rotating the blades along their pitch axes.

As shown in FIG.2, the controller 200 may include processor 210 and memory 220 configured to perform a variety of functions (e.g., performing the methods, steps, calculations and storing relevant data from the sensors). Additionally, the controller 200 may also include a communications interface 230 to facilitate communications between the controller 200 and the various components of the wind turbine 100. Further, the communications interface 230 may include a sensor interface to permit signals transmitted from the BLS110 and LIDAR 120 be converted into signals that can be understood and processed by the processors 210. It should be appreciated that the BLS 110 and LIDAR 120 may be communicatively coupled to the communications interface 230 using any suitable means. For example, the BLS 110 and LIDAR 120 are coupled to the communication interface 230 via a wired connection. However, in other embodiments, the BLS 110 and LIDAR 120 may be coupled to the communication interface 230 via a wireless connection.

In an embodiment, the invention provides a system for preventing shutdown of a wind turbine generator due to faulty blade load sensors (BLS). The system comprises a Controller 200. The Controller 200 receives strain values from one or more BLS 110 and based on which, it derives a first bending moment therefrom.

Based on the known properties of the Blade like Static Moment and location of the BLS, calibration of the BLS is done under known conditions to compute the factors for conversion of strain to Bending Moment. For example, when the blade is at 3 O clock position under 90 degree pitch out position, the flapwise bending moment measurement from BLS would be equivalent to the static moment of the Blade. The strain measured during this scenario results in one data point in the line equation for strain to Bending Moment conversion. Similarly, the flapwise bending moment measurement from BLS when the blade is positioned at 9 O clock at low wind speeds (2 m/s to 4 m/s) under 90 deg pitch out position should be equal to the static moment of the blade with opposite magnitude compared to that of 3 O clock positioned scenario. This leads to the 2nd data point in the line equation. The slope and offset of the line equation is computed which is used in the below equation to come up with the Bending Moment from Strain.

$$BM= Slope*Strain + Offset$$

This first bending moment is typically used as a primary bending moment input under normal circumstances by the Controller 200 for performing routine operations.

The determined bending moment is used by the controller feature, IPC (Individual Pitch Control) to compute the pitch commands for the individual blades to control asymmetrical loads. Accurate estimations of the bending moment would lead to accurate individual pitch commands leading to required asymmetric load reduction. High Inaccuracies in the Bending Moment estimation could lead to higher asymmetric loads detrimental to the wind turbine safety.

Further, the controller 200 derives a reference bending moment based on one or more wind data parameters received from one or more alternative sources. In an embodiment, the alternative source includes the LIDAR 120 positioned on the nacelle of the wind turbine generator. The LIDAR 120 captures wind data parameters such as wind speed, wind shear and Turbulence Intensity (TI). This data set is passed to the Controller 200 for calculating the reference bending moment based on a known analytical model derived from predetermined Bending moment database as function of Wind Speed, Shear and TI.

In an embodiment, the alternative source may also include a look up table comprising bending moment data corresponding to the specific values of Wind Shear, Turbulence Intensity (TI) and Windspeed. The look-up table is static and determined based on simulations and provides details about the theoretical bending moment at a given windspeed and corresponding TI and Windshear. The LIDAR 120 is preferably used for determining the data sets such as wind speed, wind shear and TI. Alternatively, other sensors may also be used. After the said data sets are captured through LIDAR 120 by the Controller 200, the controller 200 then refers to the look-up table to determine the specific bending moment against the 3 specific data sets.

In an embodiment, the look-up table has 4 columns - 'Bending Moment, Wind speed, Wind shear and TI'. The Controller 200 is configured to find the exact row which has the 3 specific data sets. For example, if the Wind Speed, Wind Shear and TI determined from LIDAR 120 or other sources is x, y and z - the controller searches for a row in the look-up table which has these specific values - x, y and z. After the Controller 200 finds such a row, it is the corresponding bending moment value, say A, in the same row is selected as the reference bending moment.

Thereafter, the Controller 200 compares the first and reference bending moments to determine if the BLS (110) is faulty. The BLS 110 is determined to be not faulty, if the first bending moment is within a predetermined range, say 10% of the reference bending moment. No further action is taken, and the WTG continues to operate normally.

The BLS 110 is determined as faulty, if the first bending moment obtained from the BLS 110 values is 0 or outside a pre-determined range, say 10% of the reference bending moment. The controller 200 replaces the first bending moment with the reference bending moment, as primary bending moment input thereby preventing the shutdown of the WTG due to the faulty BLS (110).

In an embodiment, the invention provides a method for preventing shutdown of a wind turbine generator due to faulty blade load sensors (BLS). The method comprises several steps performed by the Controller 200. The Controller 200 receives strain values from one or more BLS 110 and based on which, it derives (310) a first bending moment therefrom.

Based on the known properties of the Blade like Static Moment and location of the BLS, calibration of the BLS is done under known conditions to compute the factors for conversion of strain to Bending Moment. For example, when the blade is at 3 O clock position under 90 degree pitch out position, the flapwise bending moment measurement from BLS would be equivalent to the static moment of the Blade. The strain measured during this scenario results in one data point in the line equation for strain to Bending Moment conversion. Similarly, the flapwise bending moment measurement from BLS when the blade is positioned at 9 O clock at low wind speeds (2 m/s to 4 m/s) under 90 deg pitch out position should be equal to the static moment of the blade with opposite magnitude compared to that of 3 O clock positioned scenario. This leads to the 2nd data point in the line equation. The slope and offset of the line equation is computed which is used in the below equation to come up with the Bending Moment from Strain.

$$BM = Slope*Strain + Offset$$

This first bending moment is typically used as a primary bending moment input under normal circumstances by the Controller 200 for performing routine operations.

The determined bending moment is used by the controller feature, IPC (Individual Pitch Control) to compute the pitch commands for the individual blades to control asymmetrical loads. Accurate estimations of the bending moment would lead to accurate individual pitch commands leading to required asymmetric load reduction. High Inaccuracies in the Bending Moment estimation could lead to higher asymmetric loads detrimental to the wind turbine safety.

Further, the controller 200 derives a reference bending moment (320) based on one or more wind data parameters received from one or more alternative sources. In an embodiment, the alternative source includes the LIDAR 120 positioned on the nacelle of the wind turbine generator. The LIDAR 120 captures wind data parameters such as wind speed, wind shear and Turbulence Intensity (TI). This data set is passed to the Controller 200 for deriving/calculating the reference bending moment based on a known algorithm / mathematical formula.

In an embodiment, the alternative source may also include a look up table comprising bending moment data corresponding to the specific values of Wind Shear, Turbulence Intensity (TI) and Windspeed. The look-up table is static and determined based on simulations and provides details about the theoretical bending moment at a given windspeed and corresponding TI and Windshear. The LIDAR 120 is preferably used for determining the data sets such as wind speed, wind shear and TI. Alternatively, other sensors may also be used. After the said data sets are captured through LIDAR 120 by the Controller 200, the controller 200 then refers to the look-up table to determine the specific bending moment against the 3 specific data sets.

In an embodiment, the look-up table has 4 columns - 'Bending Moment, Wind speed, Wind shear and TI'. The Controller 200 is configured to find the exact row which has the 3 specific data sets. For example, if the Wind Speed, Wind Shear and TI determined from LIDAR 120 or other sources is x, y and z - the controller searches for a row in the look-up table which has these specific values - x, y and z. After the Controller 200 finds such a row, it is the corresponding bending moment value, say A, in the same row is selected as the reference bending moment.

Thereafter, the Controller 200 compares (330) the first and reference bending moments to determine if the BLS (110) is faulty. The BLS 110 is determined to be not faulty, if the first bending moment is within a pre-determined range, say 10% of the reference bending moment. No further action is taken, and the WTG continues to operate normally.

The BLS 110 is determined as faulty, if the first bending moment obtained from the BLS 110 values is 0 or outside a pre-determined range, say 10% of the reference bending moment. The controller 200 replaces (350) the first bending moment with the reference bending moment, as primary bending moment input thereby preventing the shutdown of the WTG due to the faulty BLS (110).

Many modifications and other embodiments of the invention set forth herein will readily occur to one skilled in the art to which the invention pertains having the benefit of the teachings presented in the foregoing descriptions and the associated drawings. Therefore, it is to be understood that the invention is not to be limited to the specific embodiments disclosed and that modifications and other embodiments are intended to be included within the scope of the appended claims. Although specific terms are employed herein, they are used in a generic and descriptive sense only and not for purposes of limitation.

The foregoing description of embodiments of the invention has been presented for purposes of illustration and description. It is not intended to be exhaustive or to limit the invention to the precise form disclosed, and modifications and variations are possible in light of the above teachings or may be acquired from the practice of the invention. The embodiments were chosen and described in order to explain the principals of the invention and its practical application to enable one skilled in the art to utilize the invention in various embodiments and with various modifications as are suited to the particular use contemplated.

## Claims

1. A system (100) for preventing shutdown of a Wind Turbine Generator (WTG) due to one or more faulty Blade load sensors (BLS) (110) embedded within one or more blades of the WTG, the system comprising a Controller (200) within the WTG, the Controller (200) configured to:

   a) receive strain values from one or more BLS (110) and deriving a first bending moment therefrom wherein the first bending moment is used as a primary bending moment input under normal circumstances;
   b) derive a reference bending moment based on one or more wind data parameters received from one or more alternative sources (120);
   c) compare the first and reference bending moments, wherein if the first bending moment is above or below a pre-determined threshold bending moment, determining that the BLS (110) is faulty; and
   d) upon determining that the BLS is faulty, replacing the first bending moment with the reference bending moment as primary bending moment input to the controller (200) thereby preventing the shutdown of the WTG due to the faulty BLS (110).

2. The system as claimed in claim 1, wherein the alternative source includes a Light Detection and Ranging (LIDAR) (120) positioned on a nacelle of the wind turbine generator, wherein the controller (200) is configured to:

   a) receive one or more wind data parameters from the LIDAR (120) including wind speed, wind shear and Turbulence Intensity (TI); and
   b) derive a reference bending moment based on the one or more wind data parameters received from the LIDAR (120).

3. The system as claimed in claim 1, wherein the alternative source includes the Light Detection and Ranging (LIDAR) (120) positioned on the nacelle of the wind turbine generator and a look-up table stored within the controller (200), the look-up table comprising bending moment data corresponding to each one or more wind data parameters, wherein the controller (200) is configured to:

   a) receive one or more wind data parameters from the LIDAR (120) including wind speed, wind shear and Turbulence Intensity (TI); and
   b) searching the look-up table to obtain a reference bending moment data from the look-up table corresponding to the one or more wind data parameters received from the LIDAR (120).

4. A method (100) of preventing shutdown of a Wind Turbine Generator (WTG) due to one or more faulty Blade load sensors (BLS) (110) embedded within one or more blades of the WTG, the method comprising the steps of:

   a) receiving strain values from one or more BLS (100) and deriving a first bending moment therefrom wherein the first bending moment is used as a primary bending moment input under normal circumstances;
   b) deriving a reference bending moment based on one or more wind data parameters received from one or more alternative sources (120);
   c) comparing the first and reference bending moments, wherein if the first bending moment is above or below a pre-determined threshold bending moment, determining that the BLS (110) is faulty;
   d) upon determining that the BLS is faulty, replacing the first bending moment with the reference bending moment as primary bending moment input to the controller (200) thereby preventing the shutdown of the WTG due to the faulty BLS (110).

5. The method as claimed in claim 4, wherein the alternative source includes a Light Detection and Ranging (LIDAR) (120) positioned on a nacelle of the wind turbine generator, wherein the controller (200) is performing steps of:

   a) receiving one or more wind data parameters from the LIDAR (120) including wind speed, wind shear and Turbulence Intensity (TI); and
   b) deriving a reference bending moment based on the one or more wind data parameters received from the LIDAR (120).

6. The method as claimed in claim 4, wherein the alternative source includes the Light Detection and Ranging (LIDAR) (120) positioned on the nacelle of the wind turbine generator and a look-up table stored within the controller (200), the look-up table comprising bending moment data corresponding to each one or more wind data parameters, wherein the controller (200) is performing steps of:

a) receiving one or more wind data parameters from the LIDAR (120) including wind speed, wind shear and Turbulence Intensity (TI); and
b) searching the look-up table to obtain a reference bending moment data from the look-up table corresponding to the one or more wind data parameters received from the LIDAR (120).

**Fig. 1**

CONTROLLER

PROCESSOR — 210

MEMORY — 220

COMMUNICATION
INTERFACE — 230

**Fig. 2**

**300**

DERIVING A FIRST BENDING
MOMENT FROM BLS

310

DERIVING A REFERENCE BENDING
MOMENT BASED ON ONE OR MORE
WIND DATA PARAMETERS RECEIVED
FROM LIDAR

320

COMPARING THE FIRST AND
REFERENCE BENDING MOMENTS

330

IF FIRST BENDING MOMENT IS ABOVE
OR BELOW A PRE-DETERMINED
THRESHOLD THEN BLS IS FAULTY

340

WHEN BLS IS FAULTY, FEEDING
REFERENCE BENDING MOMENTS DATA
TO THE CONTROLLER

350

**Fig. 3**

**EUROPEAN SEARCH REPORT**

Application Number

EP 25 15 9791

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2017/009739 A1 (CAPONETTI FABIO [DK] ET AL) 12 January 2017 (2017-01-12) * paragraphs [0056] - [0062]; claims 1-9; figure 1 * | 1-6 | INV. F03D17/00 |
| | ----- | | |
| Y | CN 115 898 786 A (CSIC HAIZHUANG WINDPOWER CO LTD) 4 April 2023 (2023-04-04) * Abstract; paragraphs [0002] - [0005], [0057] * | 1-6 | |
| | ----- | | |

TECHNICAL FIELDS
SEARCHED      (IPC)

F03D

The present search report has been drawn up for all claims

| Place of search | Date of completion of the search | Examiner |
|---|---|---|
| The Hague | 11 August 2025 | Król, Marcin |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons

............................................................................
& : member of the same patent family, corresponding
  document

EPO FORM 1503 03.82 (P04C01)

## ANNEX TO THE EUROPEAN SEARCH REPORT
## ON EUROPEAN PATENT APPLICATION NO.

EP 25 15 9791

This annex lists the patent family members relating to the patent documents cited in the above-mentioned European search report.
The members are as contained in the European Patent Office EDP file on
The European Patent Office is in no way liable for these particulars which are merely given for the purpose of information.

11-08-2025

| Patent document cited in search report | Publication date | Patent family member(s) | Publication date |
|---|---|---|---|
| US 2017009739 A1 | 12-01-2017 | US 2013110414 A1<br>US 2017009739 A1 | 02-05-2013<br>12-01-2017 |
| CN 115898786 A | 04-04-2023 | NONE | |

EPO FORM P0459

For more details about this annex : see Official Journal of the European Patent Office, No. 12/82